# EUROPÄISCHE PATENTSCHRIFT

(11) **EP 2 001 717 B1**
(45) Veröffentlichungstag und Bekanntmachung des Hinweises auf die Patenterteilung: **14.11.2012**
(21) Anmeldenummer: 07703768.7
(22) Anmeldetag: 10.01.2007
(51) Int. Cl.: B60T 7/10, B60T 13/74

(54) **Elektrische Parkbremse mit einem Bedienelement zur Umschaltung in einen Servicemodus**
Electric parking brake having a control element for switching into a service mode
Frein de stationnement électrique muni d'un élément de commande pour basculer dans un mode de service

(30) Priorität: 23.03.2006 DE 102006013509
(43) Veröffentlichungstag der Anmeldung: 17.12.2008
(73) Patentinhaber: Continental Automotive GmbH, 30165 Hannover (DE)
(72) Erfinder: BENTNER, Johannes, 93080 Pentling (DE); KALBECK, Alexander, 93133 Burglengenfeld (DE); LABERMEIER, Norbert, 93173 Wenzenbach (DE)
(86) Internationale Anmeldenummer: PCT/EP2007/050221
(87) Internationale Veröffentlichungsnummer: WO 2007/107386

(56) Entgegenhaltungen:
- EP-A- 1 595 763
- DE-A1- 19 838 886
- DE-A1-102005 031 725
- US-A1- 2006 064 224

## Beschreibung

Die Erfindung betrifft eine elektrische Parkbremse eines Kraftfahrzeugs, wobei in einem Betriebsmodus mindestens ein Aktuator mittels einer Bremsmechanik mindestens eine Radbremse einer Feststellbremse anzieht oder löst. Bei der elektrischen Parkbremse besteht ähnlich wie bei einer konventionellen mechanischen Feststellbremse die Systemanforderung, dass das mechanische Bremssystem gewartet werden kann, beispielsweise müssen das Bremsseil oder auch Bremsbeläge getauscht, erneuert bzw. nachjustiert werden.

In diesem Zusammenhang wurde die Notwendigkeit erkannt, die Parkbremse in einem Servicemodus mit Hilfe einer Lösefunktion in eine komplett geöffnete Position so zu steuern, dass keine Kräfte auf das Bremsseil und die Bremsmechanik einwirken. Im Gegensatz zu einer konventionellen mechanischen Feststellbremse kann bei der elektrischen Parkbremse die komplett geöffnete Position nicht einfach mechanisch eingestellt werden. Vielmehr ist es notwendig, im Servicemodus die elektrische Parkbremse auf elektrischem Wege mit einer entsprechenden Lösefunktion in die komplett geöffnete Position zu stellen.

Weiterhin wurde aus Sicherheitsgründen die Notwendigkeit erkannt, dass die Feststellbremse diese Lösefunktion nur im Ausnahmefall einnehmen darf, wenn das Fahrzeug steht und keine Gefahr besteht, dass es zum Beispiel wegrollen kann. In dieser geöffneten Position ist eine Feststellbremse so weit geöffnet, dass sich ein eventuell vorhandenes, eingehängtes Bremsseil, mit dem die Bremsbacken oder Bremsbeläge der Feststellbremse angezogen werden, sich von selbst aus den Halterungen lösen kann, so dass die Feststellbremse in ihrer Funktion unwirksam wird.

Zur Vermeidung der oben genannten Probleme wurde bei einer bekannten elektrischen Parkbremse eine Aktivierung des Servicemodus nur über ein gesichertes Diagnosekommando ermöglicht. Das Diagnosekommando wird dabei mit Hilfe eines externen Diagnosegerätes eingegeben, das mit der elektrischen Parkbremse entsprechend verbunden werden muss. Ein solches Diagnosegerät funktioniert in der Regel nur für einen bestimmten Fahrzeugtyp eines einzelnen Fahrzeugherstellers und steht vermutlich nicht in allen Service-Werkstätten zur Verfügung. Aus Kostengründen wird daher nur ein geringer Anteil der Service-Werkstätten ein solches herstellerbezogenes Diagnosegerät benutzen können.

Das Dokument DE19838886A1 wird als nächstliegender Stand der Technik augesehen. Es offenbart die Merkmale des Obenbegriffs des Anspruchs 1.

Der Erfindung liegt die Aufgabe zugrunde, an einer elektrischen Parkbremse für ein Kraftfahrzeug eine sichere und einfache Umschaltung von einem Betriebsmodus in einen Servicemodus und umgekehrt zu ermöglichen. Die Aufgabe wird mit der Gesamtheit der Merkmale des Anspruchs 1 gelöst.

Bei der erfindungsgemäßen elektrischen Parkbremse für ein Kraftfahrzeug ergibt sich der Vorteil, dass für der Umschaltung von einem Betriebsmodus in einen Servicemodus nur wenigstens ein Bedienelement des Kraftfahrzeug benötigt wird. Das Bedienelement wird dabei für die Umschaltung nach einem vorgegebenen Eingabeschema betätigt. Dadurch kann in vorteilhafter Weise auf ein externes Diagnosegerät verzichtet werden. Servicearbeiten an der elektrischen Parkbremse sind somit sehr viel einfacher und schneller durchführbar. Insbesondere kann nun jede beliebige Fachwerkstatt Wartungs- und Reparaturarbeiten an der elektrischen Parkbremse durchführen. Als besonders vorteilhaft wird auch angesehen, dass durch die Erfindung in der Fachwerksatt praktisch alle Fahrzeugtypen und Fabrikate ohne großen Mehraufwand versorgt werden können.

Durch die in den abhängigen Ansprüchen angegebenen Maßnahmen sind vorteilhafte Weiterbildungen und Verbesserungen der im Anspruch 1 angegebenen elektrischen Parkbremse gegeben. Insbesondere wird eine unerwünschte Manipulation an der Parkbremse erschwert, wenn zur Umschaltung zwei oder mehrere verschiedene Bedienelemente erforderlich sind.

Besonders vorteilhaft wird auch angesehen, dass als zweites Bedienelement ein Aktivierungsschalter verwendet wird, der im Kraftfahrzeug bereits vorhanden ist und ohnehin für die Betätigung der elektrischen Parkbremse zu benutzen ist. Dadurch kann auf ein zusätzlich einzubauendes Bedienelement in das Kraftfahrzeug verzichtet werden.

Zur Erhöhung der Sicherheit ist vorgesehen, dass eine Kontrolleinrichtung bei der Aktivierung des Servicemodus eine manuelle Betätigung des Bedienelementes erkennt und/oder speichert. Die erkannte und gespeicherte Information kann dann auf einfache Weise, beispielsweise als akustisches und/oder optisches Warnsignal zum Beispiel am Armaturenbrett des Kraftfahrzeugs ausgegeben werden. Dadurch erkennt der Fahrer des Kraftfahrzeugs mit einem Blick, dass die elektrische Parkbremse seines Fahrzeugs nicht betriebsbereit ist und er das Kraftfahrzeug nicht benutzen darf.

In weiterer Ausgestaltung der Erfindung ist vorgesehen, dass als Eingabeschema für die Aktivierung des Servicemoduls das Bedienelement für eine vorgegebene Minimaldauer zu drücken ist. Des weiteren wird von der Kontrollvorrichtung überprüft, ob gleichzeitig wenigstens ein weiteres Fahrzeugsignal vorliegt. Beispielsweise kann mit den im Fahrzeug bereits vorhandenen Sensoren überwacht werden, ob die Zündung eingeschaltet ist, ob das Bremspedal gedrückt ist, ob die Getriebestellung im Leerlauf bzw. bei einem Automatengetriebe in Parkposition steht oder ähnliches. Dadurch kann auf einfache Weise verhindert werden, dass sich das Fahrzeug noch bewegt und daher die elektrische Parkbremse auf gar keinen Fall in den Servicemodus umgeschaltet werden darf.

Um ein ungewolltes Umschalten vom Betriebsmodus in den Servicemodus oder umgekehrt zur Deaktivierung des Servicemodus zu verhindern, ist vorgesehen, dass das Bedienelement insbesondere innerhalb eines vorgegebenen Zeitfensters und/oder in vorgegebenen Zeitabständen mehrfach, beispielsweise nach einem bestimmten Bedienschema zu drücken ist.

Eine weitere Erhöhung der Sicherheit gegen ein ungewolltes Umschalten der elektrischen Parkbremse in den Servicemodus kann auch dadurch verhindert werden, dass ein zweites Bedienelement nach einem zweiten Betätigungsschema zu betätigen ist. Das zweite Betätigüngsschema kann dabei innerhalb eines zweiten Zeitfensters und/oder in Abhängigkeit eines Betriebszustandes des Kraftfahrzeugs betätigt werden.

Mit einem komplexeren Eingabeschema kann des weiteren verhindert werden, dass keine unbefugten Personen willkürlich die elektrische Parkbremse manipulieren können. Auf diese Weise kann sehr einfach die Funktionssicherheit der elektrischen Parkbremse verbessert werden.

Auch für die Verbesserung der Verkehrssicherheit ist vorgesehen, dass die elektrische Parkbremse automatisch in den Betriebsmodus umschaltet, wenn das vorgegebene Eingabeschema nicht eingehalten wird, wenn zum Beispiel eine definierte Zeitdauer überschritten wird, ohne dass eine Eingabe erfolgte.

Zur Rückschaltung vom Servicemodus in den Betriebsmodus ist vorgesehen, dass erneut das Bedienelement oder ein weiteres Bedienelement des Kraftfahrzeugs verwendet wird. Dieses Bedienelement kann dabei für eine vorgegebene Mindestdauer einmal oder mehrmals in einem bestimmten Bedienmodus gedrückt werden. Damit ist sichergestellt, dass der Servicemodus nicht willkürlich zurückgeschaltet werden kann, wenn beispielsweise die Servicearbeiten an dem Bremssystem noch nicht abgeschlossen sind.

Des weiteren ist erfindungsgemäß aus Sicherheitsgründen vorgesehen, dass die Rückschaltung in den Betriebsmodus nur erfolgt, wenn das Getriebe des Kraftfahrzeugs auf Leerlauf bzw. auf Parken eingestellt ist und/oder das Bremspedal für die Betriebsbremse wenigstens einmal gedrückt und anschließend gehalten wird. Zur weiteren Steigerung der Sicherheit ist auch vorgesehen, dass zur Aktivierung der elektrischen Parkbremse ein Sensorsignal des Kraftfahrzeugs verwendet wird. Beispielsweise können Signale von Fahrzeugeinrichtungen wie der Scheinwerferstellung, eines Fensterhebers, der Spiegelverstellung usw. genutzt werden. Erfindungsgemäß ist dabei vorgesehen, dass dieses zusätzliche Sensorsignal in keiner direkten Beziehung mit der Funktion der elektrischen Parkbremse steht. Dadurch wird verhindert, dass die elektrische Parkbremse beispielsweise bei einem Sensordefekt im Bremssystem ungewollt ausgelöst werden kann.

Als besondere vorteilhafte Lösung wird auch angesehen, dass nach der Rückschaltung vom Servicemodus in den Betriebsmodus der elektrischen Parkbremse automatisch oder manuell eine neue Kalibrierung der elektrischen Parkbremse erfolgt. Bei der Kalibrierung der elektrischen Parkbremse wird automatisch das Bremssystem optimiert und auf die neuen Parameter angepasst. Alternativ ist vorgesehen, dass die Rückschaltung vom Servicemodus in den Betriebsmodus manuell eingeleitet wird, wobei dabei ein weiteres vorgegebenes Betätigungsschema vorgesehen ist. Eine sehr einfache Lösung wird auch darin gesehen, dass das Betätigungsschema das Gleiche ist, mit dem die Einleitung des Servicemodus aktivierbar ist.

Die Erfindung betrifft ferner ein Fahrzeug mit einer elektrischen Parkbremse, wobei das oder die Bedienelemente in oder am Fahrzeug angeordnet sind.

Ein Ausführungsbeispiel der Erfindung ist in der Zeichnung dargestellt und wird in der nachfolgenden Beschreibung näher erläutert.
Figur 1 zeigt ein Blockschaltbild einer erfindungsgemäßen elektrischen Parkbremse und
Figur 2 zeigt ein Flussdiagramm für die oben dargestellte elektrische Parkbremse.

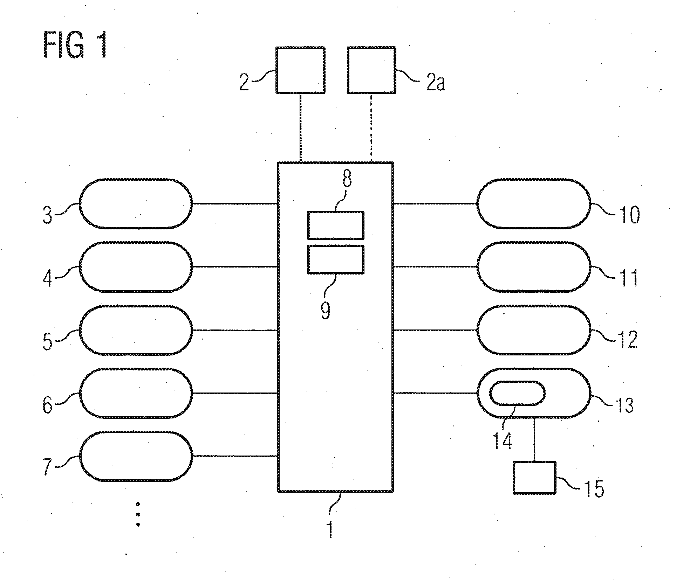

In Figur 1 ist in schematischer Darstellung ein Blockschaltbild einer erfindungsgemäßen elektrischen Parkbremse 1 dargestellt. Elektrische Parkbremsen werden beispielsweise an Kraftfahrzeugen, insbesondere bei höherwertigen PKW's, Omnibussen und LKW's verwendet. Im Unterschied zu einer mechanisch betätigbaren Feststellbremse, die mit einem Handgriff oder einem Fußpedal betätigt wird, wird bei der elektrischen Parkbremse die Bremsmechanik durch ein elektrisches Signal aktiviert. Dabei erfolgt die Aktivierung durch den Fahrer in der Regel durch Betätigung eines entsprechenden elektrischen Schalters oder Tasters. Ein Aktuator betätigt daraufhin mittels eines Getriebes ein Zugseil oder einen Getriebemechanismus, mit dem die Bremsbeläge an die Bremstrommel bzw. Bremsscheiben der Feststellbremse angelegt werden.

Die erfindungsgemäße elektrische Parkbremse 1 gemäß Figur 1 weist im wesentlichen eine programmgesteuerte Steuereinheit 8 auf. Die Steuereinheit 8 verarbeitet dabei alle eingehenden Signale und ermittelt ein entsprechendes Steuersignal zur Aktivierung eines Aktuators 14, der mit einer Bremsmechanik 13 verbunden ist. Die Bremsmechanik 13 ist mit den einzelnen Bremsen der zu bremsenden Räder des Kraftfahrzeugs mechanisch gekoppelt und kann somit die Bremsen festziehen oder lösen.

Des weiteren weist die elektrische Parkbremse 1 eine Kontrollvorrichtung 9 auf, mit der verschiedene Funktionen überwacht werden. Die Kontrollvorrichtung 9 gibt entsprechende Warnsignale optisch und/oder akustisch aus, wie später noch näher erläutert wird.

Eingangsseitig ist die elektrische Parkbremse 1 mit verschiedenen Fahrzeugsensoren oder Motorsensoren 2 bis 7 verbunden. Gemäß Figur 1 ist die elektrische Parkbremse 1 eingangsseitig mit mindestens einem Signalgeber 3 verbunden, der ein oder mehrere Fahrzeugsignale an die elektrische Parkbremse 1 senden kann. Beispielsweise kann auf diese Weise ein Geschwindigkeitssignal erfasst werden, es kann ein Türstatus gesendet werden, mit dem überwacht wird, ob eine Fahrzeugtür geöffnet ist, es kann ein Sitzstatus empfangen werden usw.

Die elektrische Parkbremse 1 ist weiterhin mit einem Bremspedalsignalgeber 4 verbunden. Mit Hilfe des Bremspedalgebers 4 kann festgestellt werden, ob beispielsweise vom Fahrer des Kraftfahrzeugs die Betriebsbremse betätigt wird oder nicht.

Die elektrische Parkbremse 1 ist ebenfalls mit einem Getriebeschaltersignalgeber 5 verbunden. Mit dem Getriebeschalter 5 können Schalt-Informationen an die elektrische Parkbremse gesendet werden. Diese Informationen werden in Abhängigkeit davon gesendet, ob in das Kraftfahrzeug ein manuell schaltbares Getriebe oder ein Automatikgetriebe eingebaut ist und welche Stellung/Stufe das Getriebe gerade einnimmt.

Des Weiteren ist die elektrische Parkbremse 1 mit einem Informationsgeber 6 für die Zündung und/oder weitere Motor-Informationen elektrisch verbunden. Anhand dieser Informationen kann beispielsweise festgestellt werden, ob der Motor läuft oder abgeschaltet wurde. Die mit der elektrischen Parkbremse 1 eingangsseitig verbundenen Schalter und Geber sind fakultativ dargestellt. In alternativer Ausgestaltung der Erfindung ist vorgesehen, auch weitere Geber 7 an die elektrische Parkbremse 1 anzuschließen. Der weitere Geber 7 kann beispielsweise Signale von Bedieneinheiten des Kraftfahrzeugs liefern oder von anderen Fahrzeugsystemen, wie einem Radio, einer Multimedia-Einheit usw.

Anhand der von den Gebern 3 bis 7 gelieferten Signale überwacht die Kontrollvorrichtung 9 die Funktion des Fahrzeugs und insbesondere, ob aus Sicherheitsgründen ohne Gefahr für Fahrzeuginsassen oder einem Service-Mechaniker die elektrische Parkbremse 1 für Wartungsarbeiten außer Betrieb genommen werden kann. Denn Wartungsarbeiten können an der elektrischen Parkbremse 1 aus Sicherheitsgründen nur durchgeführt werden, wenn das Kraftfahrzeug zum Beispiel gegen ein ungewolltes Wegrollen gesichert ist und die elektrische Parkbremse nicht in ihrem Betriebsmodus benötigt wird.

Wie Figur 1 weiter entnehmbar ist, ermittelt die Steuereinheit 8 aufgrund der eingegangenen Signale, ob die Feststellbremse 15 am Rad des Kraftfahrzeugs mit samt der Bremsmechanik 13 von dem Betriebsmodus in den Servicemodus umgeschaltet werden kann. Bei der Umschaltung in einen Servicemodus wird ein Aktuator 14 elektrisch aktiviert, der mit der Bremsmechanik 13 mechanisch gekoppelt ist. Die Bremsmechanik 13 weist im wesentlichen ein Getriebe auf, mit dem gegebenenfalls auch ein Seilzug betätigt wird, um durch eine Zugkraft oder Druckkraft die Feststellbremse zu aktivieren bzw. bei Entlastung zu öffnen und gegebenenfalls die übertragene Kraft zu reduzieren (in Figur 1 nicht dargestellt). Die eigentliche Feststellbremse 15 besteht aus Bremsbelägen oder Bremsbacken, die bei Zug an eine Bremstrommel oder Bremsscheibe des Rades gepresst oder von einem Getriebemechanismus dorthin gedrückt werden und damit eine Drehbewegung des Rades blockieren oder mindern. Bei Servicearbeiten, zum Beispiel wenn die Bremsbeläge oder die Bremsscheibe erneuert werden muss, ist es jedoch erforderlich, dass die Feststellbremse 15 elektrisch in eine vollkommen offene Stellung gefahren wird. In dieser sogenannten Notlösefunktion ist das Bremsseil entlastet und vollkommen kräftefrei, so dass die mechanischen Teile der Bremsen oder das Bremsseil ohne große Kraftanstrengung und ohne Beschädigung der Bremsanlage ausgetauscht werden können. In dieser komplett geöffneten Position des Bremssystems besteht jedoch die Gefahr, dass sich beispielsweise das Bremsseil, soweit es vorhanden ist, vom Bremshebel aushängen kann und dadurch eine Aktivierung der Bremse verhindert wird. Aus Sicherheitsgründen ist daher erfindungsgemäß vorgesehen, dass die Umschaltung in den Servicemodus nur über ein gesichertes Diagnosekommando erfolgen kann. Dieses gesicherte Diagnosekommando ist jedoch erfindungsgemäß derart ausgebildet, dass mit vorhandenen Bedienelementen des Kraftfahrzeugs und mit Hilfe eines vorgegebenen Eingabeschemas auf den Servicemodus umgeschaltet werden kann. Ein separates Diagnosegerät ist für die Umschaltung in den Servicemodus und umgekehrt zurück in den Betriebsmodus des Bremssystems nicht erforderlich.

Ausgangsseitig ist die elektrische Parkbremse 1 mit einem Display 10 verbunden, auf dem die Funktionsbereitschaft der elektrischen Parkbremse 1 darstellbar ist. Des weiteren ist die elektrische Parkbremse 1 mit einer Warnlampe 11 verbunden, die zum Beispiel am Armaturenbrett des Fahrzeugs angeordnet ist und ein Warnsignal ausgibt, wenn die elektrische Parkbremse beispielsweise in den Betriebsmodus geschaltet wurde. Zusätzlich zur Warnlampe 11 kann auch ein akustisches Signal ausgegeben werden. Weiterhin ist eine Anzeige 12 vorgesehen, auf der beispielsweise der Status der elektrischen Parkbremse ausgegeben wird. Die Anzeige 12 zeigt insbesondere an, ob sich die elektrische Parkbremse 1 im Betriebsstatus befindet und damit betriebsbereit ist oder ob in den Servicemodus umgeschaltet wurde und die Parkbremse 1 nicht betriebsbereit ist.

Erfindungsgemäß ist vorgesehen, das in Figur 1 dargestellte Ausführungsbeispiel der Erfindung entsprechend den Anforderungen des Kraftfahrzeugherstellers an die besonderen Gegebenheiten anzupassen. Insbesondere können die Bedienelemente 2, 2a fahrzeugspezifisch modifiziert werden. Die Bedienelemente 2,2a können als einfache Taster (gegebenenfalls redundant) mit einer Mehrfachstellung (Push/Pull-Taster), als Schalter mit entsprechendem Hebel oder dergleichen ausgebildet sein. Vorzugsweise kann jedes Bedienelement des Kraftfahrzeugs als Preschalter zur Vorbereitung der Umschaltfunktion ausgebildet sein. Die eigentliche Aktivierung der Umschaltung erfolgt dann vorzugsweise mit dem Bedienelement, mit dem die Parkbremse im Betriebsmodus normalerweise betätigt wird.

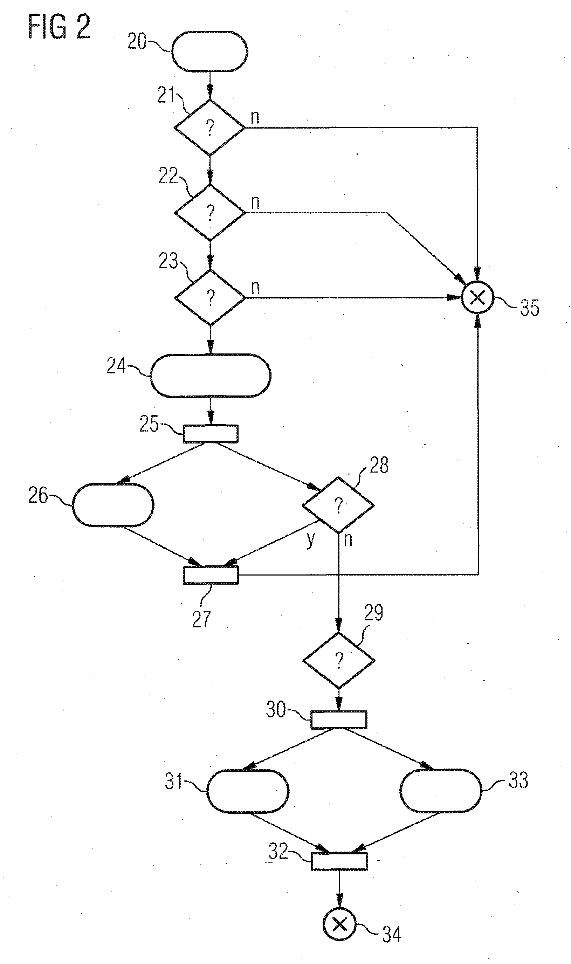

Anhand des Flussdiagramms der Figur 2 wird nachfolgend die Funktionsweise der in Figur 1 dargestellten elektrischen Parkbremse 1 näher erläutert.

Wie bereits zuvor erwähnt wurde, erfolgt die Umschaltung von dem Betriebsmodus in den Servicemodus mit wenigstens einem Bedienelement 2, 2a des Kraftfahrzeugs nach einem vorgegebenen Eingabeschema. Ein externes Diagnosegerät ist dazu nicht erforderlich. Entsprechend Figur 2 wird angenommen, dass sich die elektrische Parkbremse 1 entsprechend Position 20 (Figur 2) im normalen Betriebsmodus befindet. In diesem Modus ist die elektrische Parkbremse 1 beispielsweise über das Bedienelement 2 (Figur 1) aktivierbar. Das Bedienelement 2 ist dafür innerhalb des Kraftfahrzeugs, beispielsweise auf einem Bedienfeld des Armaturenbrettes, am Lenkrad oder des Tunnels angeordnet. Figur 2 zeigt nun in diesem Ausführungsbeispiel, wie von dem normalen Betriebsmodus in den Servicemodus umgeschaltet werden kann. Dazu wird als Eingabeschema eine sichere Kombination von Bedienschritten mit den im Fahrzeug vorhandenen Bedienelementen 2, 2a angewendet, um im Servicemodus eine komplette Lösefunktion für die elektrische Parkbremse zu erreichen. Dabei ist Ziel der Erfindung, dass diese Lösefunktion als Servicefunktion sicher erkannt wird, so dass dadurch keine Fehler in das Bremssystem eingetragen werden. Des weiteren kann das Bremssystem nach Beendigung der Servicearbeiten automatisch in den normalen Betriebsmodus zurückkehren. Alternativ ist vorgesehen, dass mit einem ähnlichen Eingabeschema die elektrische Parkbremse manuell in den normalen Betriebsmodus zurückgeschaltet werden kann.

Eine sehr einfache Lösung für die Umschaltung in den Servicemodus besteht darin, dass der normale Bedienknopf der elektrischen Parkbremse als Eingabeelement verwendet wird. Zum Beispiel kann der Bedienknopf der elektrischen Parkbremse in eine bestimmte Betätigungsstellung gesetzt werden und muss über einen definierten Zeitraum gedrückt werden. Aus Sicherheitsgründen ist jedoch vorgesehen, dass nur dann in den Servicemodus umgeschaltet werden kann, wenn zusätzliche Fahrzeugsignale vorliegen. Als Alternative oder zusätzliche Lösung ist vorgesehen, dass für die Fahrzeugsignale gewisse Muster abgefragt werden. Beispielsweise wird die Anzahl der Betätigungen des Bedienelementes 2 innerhalb eines gewissen Zeitraumes oder in definierten Zeitabständen überprüft. Aus Sicherheitsgründen ist weiterhin vorgesehen, dass dieser Betätigungsmechanismus nur zur Vorbereitung für die Umschaltung in den Servicemodus führt. Die eigentliche Aktivierung des Servicemodus erfolgt mit dem zweiten Bedienelement 2a. Erst bei erneuter Betätigung des Bedienelementes 2a oder eines weiteren (zweiten) Bedienelementes erfolgt die Auslösung der kompletten Lösefunktion für die Parkbremse. Das Bedienelement für die Aktivierung des Servicemodus beziehungsweise zur Auslösung der Parkbremse kann identisch sein. Wird das zweite Bedienelement 2a, das vorzugsweise der Schalter für die Aktivierung der Parkbremse im Betriebsmodus ist, beziehungsweise das weitere Bedienelement für den zweiten Bedienschritt nicht innerhalb einer gewissen Zeitspanne oder eines bestimmten Fahrzeugzustands (beispielsweise wurde das Fahrzeug bei der Aktivierung nicht bewegt) oder nach einem bestimmten Bedienmuster nicht aktiviert, so geht das System wieder in den normalen Betriebsmodus über.

Erfindungsgemäß wird vorgeschlagen, dass zur Vorbereitung der Umschaltung in den Servicemodus das Bedienelement 2 beispielsweise 30 Sekunden gedrückt wird. In dieser Zeit muss die Getriebestellung bei einem Automatikgetriebe in Parkposition eingelegt sein und das Bremspedal drei Mal betätigt und anschließend gehalten werden. Eine anschließende Betätigung des Bedienelementes 2a löst die Umschaltung in den Servicemodus mit der vollständigen Lösefunktion der elektrischen Parkbremse aus.

Es ist vorgesehen, dass zur Erhöhung der Sicherheit noch weitere Signale verwendet werden, die im Fahrzeug vorhanden sind und nicht direkt mit der elektrischen Parkbremse in Verbindung stehen. Dazu können Signale von Bedienelementen oder andere Gebersignale, beispielsweise Signale aus dem Bodybereich herangezogen und in das Eingabeschema integriert werden.

Ein wesentlicher Aspekt der Erfindung besteht auch darin, dass generell der Fahrer über die Einnahme des Servicemodus zu informieren ist. Das kann entweder optisch mit einer entsprechenden Lampe oder akustisch durch entsprechende Warnsignale, Warnmeldungen oder Fehlerlampen durchgeführt werden. Insbesondere, wenn die elektrische Parkbremse in ihrem Servicemodus ist, ist immer ein Staussignal für diesen Betriebszustand zu setzen.

Die Einnahme des normalen Betriebsmodus ist erfindungsgemäß aus Sicherheitsgründen soweit abgesichert, dass ein versehentliches Bedienen oder eine normale Bedienung durch den Fahrer nicht zu einer Aktivierung des Servicemodus führen kann. Dadurch ist sichergestellt, dass insbesondere im Servicemodus auch keine Gefährdung der Personen erfolgen kann, die an der elektrischen Parkbremse arbeiten. Die Rückschaltung vom Servicemodus in den normalen Betriebsmodus erfolgt daher vorzugsweise mit der gleichen Verfahrensweise, wie sie zuvor beschrieben wurde, gegebenenfalls mit unterschiedlichen Bedienmustern.

Da während der Servicearbeiten sich die Parameter der elektrischen Parkbremse verstellt haben können, ist vor Rückschaltung in den Betriebsmodus eine neue Kalibrierung vorgesehen. Treten nach der Kalibrierung irgendwelche Fehler auf, so werden diese dem Fahrer durch eine entsprechende Fehlermeldung mitgeteilt. Die elektrische Parkbremse ist dann nicht funktionsfähig.

Die Funktion mit dem zuvor erläuterten Eingabeschema für die Umschaltung in den Servicemodus und umgekehrt zur Rückschaltung in den normalen Betriebsmodus wird nun weiter anhand der Figur 2 näher erläutert. In Position 21 wird abgefragt, ob die Triggerbedingungen für die Umschaltung in den Servicemodus vorliegen. Beispielsweise wird überprüft, ob die Zündung eingeschaltet ist, das Getriebe in Parkposition steht und die Betriebsbremse gedrückt ist. Ist das nicht der Fall, dann kehrt das System in den normalen Betriebsmodus zurück und zeigt dieses optional im Display durch eine entsprechende Anzeige (Position 35) an. Im anderen Fall wird in Position 22 geprüft, ob das Bedienelement 2 für die vorgegebene Dauer oder nach dem vorgegebenen Eingabeschema gedrückt wurde. Ist das nicht der Fall, dann schaltet das System wieder auf Position 35 und kehrt in den normalen Betriebsmodus zurück.

In Position 23 wird geprüft, ob die erwarteten Triggersignale von weiteren Bedienelementen oder Fahrzeugeinheiten vorliegen beziehungsweise über eine gewisse Zeitdauer vorliegen oder ein vorgegebenes Bedienmuster eingehalten wurde. Ist das nicht der Fall, dann kehrt das System wieder in Position 35 zurück und eine entsprechende Warnanzeige wird ausgegeben. Im anderen Fall ist nun in Position 24 die elektrische Parkbremse zum Einleiten des Servicemodus vorbereitet.

In Position 25 wird das Flussdiagramm in zwei Teile aufgeteilt, wobei beide Teile parallel oder sequentiell abgearbeitet werden können. In Position 26 wird auf einer Anzeige/Display der Status angezeigt, dass die Umschaltung in den Servicemodus erfolgreich vorbereitet ist, d.h. alle gestellten Bedingungen sind erfüllt. Parallel dazu wird in Position 28 das vorgegebene Zeitintervall für das Eingabeschema überprüft. Wurde das vorgegebene Zeitintervall überschritten, dann wird bei Y in Position 27 einerseits das Vorbereitungssignal gelöscht und anschließend in Position 35 angezeigt, dass der normale Betriebsmodus wieder eingenommen wird.

Im anderen Fall, wenn das Zeitfenster in Position 28 eingehalten wurde, überprüft das Programm (Pfad n, Position 29), ob das Eingabeschema für das zweite Bedienelement 2a erfolgreich eingegeben und die weiteren Fahrzeugparameter erfüllt wurden. Ist dies der Fall, dann wird die Parkbremse in den Servicemodus umgeschaltet und die vollständige Lösefunktion angefahren (Position 30,33). Parallel dazu wird in Position 30,31 das Warnsignal optisch und/oder akustisch ausgegeben. In Position 32 wird das Programm wieder zusammengeführt.

In Position 34 wird angezeigt, dass die elektrische Parkbremse vollständig gelöst ist. Dieser Zustand wird beibehalten, bis die elektrische Parkbremse vorzugsweise mit der gleichen Prozedur, wie sie zuvor beschrieben wurde, automatisch oder manuell in den normalen Betriebszustand zurückgeschaltet wird. Dieses berücksichtigt insbesondere auch die Fälle, bei denen die Spannungsversorgung vom Steuergerät getrennt wurde.

Die Erfindung ist nicht auf das dargestellte Ausführungsbeispiel beschränkt, sondern kann mannigfaltig variiert werden. Insbesondere ist vorgesehen, auch nur ein Bedienelement zu verwenden und/oder die Umschaltung in Verbindung mit dem Zündschlüssel zu kombinieren.

Zusammenfassend lässt sich die Problematik wie folgt beschreiben.

Bei Service- und Reparaturarbeiten an einer elektrischen Parkbremse (1) eines Kraftfahrzeugs besteht das Problem, dass zur Umschaltung in einen Servicemodus, bei dem die Feststellbremse (15) vollständig geöffnet werden kann, um beispielsweise ein Bremsseil austauschen zu können, in der Regel ein spezielles Diagnosegerät verwendet werden muss. Ein solches Diagnosegerät ist in Fachwerkstätten jedoch nicht immer verfügbar. Erfindungsgemäß wird daher vorgeschlagen, die Umschaltung in den Servicemodus der elektrischen Parkbremse (1) mit wenigstens einem Bedienelement (2,2a) des Kraftfahrzeugs durchzuführen. Dabei ist vorgesehen, dass aus Sicherheitsgründen und zur Vermeidung einer ungewollten Umschaltung in den Servicemodus die Betätigung des wenigstens einen Bedienelementes (2,2a) nach einem vorgegebenen Eingabeschema erfolgen muss.

### Bezugszeichenliste

- 1: elektrische Parkbremse
- 2: erstes Bedienelement
- 2a: zweites Bedienelement
- 3: Signalgeber
- 4: Bremspedalgeber
- 5: Getriebeschalter
- 6: Informationsgeber
- 7: weiterer Geber
- 8: Steuereinheit
- 9: Kontrollvorrichtung
- 10: Display/Anzeige
- 11: Warnlampe
- 12: Anzeige
- 13: Bremsmechanik
- 14: Aktuator
- 15: Feststellbremse
- 20-34: Positionen in Figur 2
- 35: Kraftfahrzeug

## Patentansprüche

1. Elektrische Parkbremse (1) für ein Kraftfahrzeug mit einem Aktuator (14) und mit einer Bremsmechanik (13) zur Betätigung einer Feststellbremse (15), wobei in einem Betriebsmodus die Feststellbremse (15) anziehbar oder lösbar ist, **gekennzeichnet durch** einen Servicemodus, in dem die Feststellbremse (15) in eine komplett geöffnete Position steuerbar ist, und wobei ein Servicemodus für die elektrische Parkbremse (1) mit wenigstens einem Bedienelement (2,2a) aktivierbar ist, wobei das wenigstens eine Bedienelement (2,2a) nach einem vorgegebenen Eingabeschema mit Hilfe einer sicheren Kombination von Eingabeschritten zu betätigen ist, und wobei eine Umschaltung in den Servicemodus nur dann ausgeführt wird, wenn gleichzeitig oder in bestimmter zeitlicher Abfolge wenigstens ein weiteres Fahrzeugsignal erkannt wurde, insbesondere, Zündung eingeschaltet', ,Bremspedal ist gedrückt', 'Fahrzeug steht', 'Getriebestellung ist im Leerlauf beziehungsweise in Parkposition' oder ähnliches.

2. Elektrische Parkbremse nach Anspruch 1, **dadurch gekennzeichnet, dass** mit einem ersten Bedienelement (2) die Umschaltung vorbreitet und mit einem zweiten Bedienelement (2a) die Umschaltung durchführbar ist.

3. Elektrische Parkbremse nach Anspruch 1 oder 2, **dadurch gekennzeichnet, dass** als alleiniges oder weiteres (zweites) Bedienelement (2a) vorzugsweise ein Aktivierungsschalter der elektrischen Parkbremse (1) verwendbar ist, mit dem die elektrische Parkbremse (1) ohnehin zu betätigen ist.

4. Elektrische Parkbremse nach einem der vorhergehenden Ansprüche, **dadurch gekennzeichnet, dass** eine Kontrollvorrichtung (9) ausgebildet ist, bei der Aktivierung des Servicemodus eine manuelle Betätigung des Bedienelementes (2,2a) zu erkennen, den Servicemodus zu speichern und den Status für den aktivierten Servicemodus als akustisches und/oder optisches Warnsignal auszugeben.

5. Elektrische Parkbremse nach einem der vorhergehenden Ansprüche, **dadurch gekennzeichnet, dass** als Vorbereitung für die Aktivierung des Servicemodus das Bedienelement (2a) für eine vorgegebene Minimaldauer zu drücken ist.

6. Elektrische Parkbremse nach einem der vorhergehenden Ansprüche, **dadurch gekennzeichnet, dass** das wenigstens eine Bedienelement (2) der Fahrzeugsignalgeber zur Aktivierung und/oder zur Deaktivierung des Servicemodus mehrfach zu drücken ist, insbesondere innerhalb eines vorgegebenen Zeitfensters oder in vorgegebenen Zeitabständen.

7. Elektrische Parkbremse nach einem der vorhergehenden Ansprüche, **dadurch gekennzeichnet, dass** zur Aktivierung und/oder Deaktivierung des Servicemodus ein zweites Bedienelement (2a) nach einem zweiten Betätigungsschema vorzugsweise innerhalb eines zweiten Zeitfensters und/oder eines Eingabeschemas und/oder in Abhängigkeit eines Betriebszustandes des Kraftfahrzeugs zu betätigen ist.

8. Elektrische Parkbremse nach Anspruch 1 oder 7, **dadurch gekennzeichnet**, das die elektrische Parkbremse (1) bei Nichteinhaltung des Eingabeschemas automatisch in den Betriebsmodus zurückschaltet.

9. Elektrische Parkbremse nach einem der vorhergehenden Ansprüche, **dadurch gekennzeichnet, dass** zur Aktivierung der elektrischen Parkbremse (1) ein Signal eines Gebers (7) des Kraftfahrzeugs, beispielsweise ein Signal eines Body-Controllers, insbesondere der Scheinwerfersteuerung, eines Fensterhebers, einer Spiegelverstellung usw. ausgewertet wird, wobei das Signal in keiner direkten Beziehung mit der Funktion der elektrischen Parkbremse (1) steht.

10. Elektrische Parkbremse nach einem der vorhergehenden Ansprüche, **dadurch gekennzeichnet, dass** die Rückschaltung in den Betriebsmodus nach dem gleichen Eingabeschema und/oder mit den gleichen Bedienelementen erfolgt, mit dem die Umschaltung in den Servicemodus erfolgt.

11. Elektrische Parkbremse nach einem der vorhergehenden Ansprüche, **dadurch gekennzeichnet, dass** zur Rückschaltung vom Servicemodus in den Betriebsmodus das weiteres Bedienelement (2a) des Kraftfahrzeugs für eine vorgegebene Mindestdauer und/oder einmal oder mehrmals zu drücken ist.

12. Elektrische Parkbremse nach Anspruch 11, **dadurch gekennzeichnet, dass** die Rückschaltung in den Betriebsmodus nur erfolgt, wenn das Getriebe des Kraftfahrzeugs auf Leerlauf beziehungsweise auf Parken eingestellt ist und/oder ein Bremspedal für die Betriebsbremse wenigstens einmal gedrückt und anschließend gehalten wird.

13. Elektrische Parkbremse nach einem der vorhergehenden Ansprüche, **dadurch gekennzeichnet, dass** vor der Rückschaltung vom Servicemodus in den Betriebsmodus oder ausgelöst durch die Rückschaltung automatisch oder manuell nach einem vorgegebenen Eingabeschema eine Kalibrierung der elektrischen Parkbremse (1) durchführbar ist.

14. Kraftfahrzeug (35) mit einer elektrischen Parkbremse nach einem der vorhergehenden Ansprüche, wobei das wenigstens eine Bedienelement (2,2a) im oder am Fahrzeug (35) angeordnet ist.

## Claims

1. Electrical parking brake (1) for a motor vehicle with an actuator (14) and with a brake mechanism (13) for actuating a parking brake (15) wherein, in an operational mode, the parking brake (15) is able to be applied or released, **characterised by** a service mode, in which the parking brake (15) can be put into a completely opened position, and wherein a service mode for the electrical parking brake (1) is able to be activated with at least one control element (2, 2a), wherein the at least one control element (2, 2a) is to be actuated in accordance with a predetermined input scheme with the aid of a safe combination of input steps and wherein a switchover into the service mode is only executed if at least one further vehicle signal was detected simultaneously or within a specific time sequence, especially 'ignition switched on', 'brake pedal is pressed', 'motor vehicle stationary', 'transmission set to the neutral or the park position' or similar.

2. Electrical parking brake according to claim 1, **characterised in that** the switchover is prepared with a first control element (2) and the switchover is able to be undertaken with a second control element (2a).

3. Electrical parking brake according to claim 1 or 2, **characterised in that** an activation switch of the electrical parking brake (1), with which the electrical parking brake (1) is to be actuated in any event, can preferably be used as the sole or further (second) control element (2a).

4. Electrical parking brake according to one of the preceding claims, **characterised in that** a control device (9) is embodied, on activation of the service mode, to detect a manual actuation of the control element (2, 2a), to store the service mode and to output the status for the activated service mode as an acoustic and/or optical warning signal.

5. Electrical parking brake according to one of the preceding claims, **characterised in that**, as preparation for the activation of the service mode, the control element (2a) is to be pressed for a predetermined minimum time.

6. Electrical parking brake according to one of the preceding claims, **characterised in that** the at least one control element (2) of the vehicle signal generator for activating and/or for deactivating the service mode is to be pressed a number of times, especially within a predetermined time window or at predetermined intervals.

7. Electrical parking brake according to one of the preceding claims, **characterised in that**, for activating and/or deactivating the service mode, a second control element (2a) is to be actuated according to a second actuation scheme, preferably within a second time window and/or an input scheme and/or depending on an operating state of the motor vehicle.

8. Electrical parking brake according to claim 1 or 7, **characterised in that** the electrical parking brake (1) is switched back automatically into the operational mode if the input scheme is not adhered to.

9. Electrical parking brake according to one of the preceding claims, **characterised in that**, for activating the electrical parking brake (1), a signal of a signal generator (7) of the motor vehicle, for example a signal of a body controller, especially the headlamp controller, of a window winder, a mirror adjuster etc. is evaluated, with the signal not having any direct relationship to the function of the electrical parking brake (1).

10. Electrical parking brake according to one of the preceding claims, **characterised in that** the switch back into operational mode is undertaken in accordance with the same input scheme and/or using the same control elements with which the switchover into service mode was made.

11. Electrical parking brake according to one of the preceding claims, **characterised in that**, for switching back from service mode into operational mode, the further control element (2a) of the motor vehicle is to be pressed for a predetermined minimum time and/or once or several times.

12. Electrical parking brake according to claim 11, **characterised in that** the switch back to operational mode is only undertaken if the transmission of the motor vehicle is set to idle or to park and/or a brake pedal for the service brake is pressed at least once and subsequently kept pressed.

13. Electrical parking brake according to one of the preceding claims, **characterised in that** a calibration of the electrical parking brake (1) is able to be carried out before the switch back from service mode into operational mode, or triggered automatically or manually by the switch back in accordance with a predetermined input scheme.

14. A motor vehicle (35) with an electrical parking brake according to one of the preceding claims, with the at least one control element (2, 2a) being arranged in or on the motor vehicle (35).

## Revendications

1. Frein de stationnement électrique (1) pour un véhicule à moteur, comportant un actionneur (14) et un mécanisme de freinage (13) destiné à actionner un frein de stationnement (15), dans lequel, en mode marche, le frein de stationnement (15) peut être serré ou desserré, **caractérisé par** un mode service, dans lequel le frein de stationnement (15) peut être commandé dans une position entièrement ouverte, un mode service, destiné au frein de stationnement électrique (1), pouvant être activé à l'aide d'au moins un élément de manoeuvre (2, 2a), le ou les éléments de manoeuvre (2, 2a) devant être actionnés selon un schéma d'entrée prédéfini à l'aide d'une combinaison sûre d'étapes d'entrée, et une commutation vers le mode service n'étant mise en oeuvre que quand, simultanément ou selon une certaine séquence temporelle, au moins un signal de véhicule supplémentaire a été reconnu, en particulier "allumage enclenché", "pédale de frein enfoncée", "véhicule à l'arrêt", "boîte de vitesse au point mort ou en position parking" ou analogues.

2. Frein de stationnement électrique selon la revendication 1, **caractérisé en ce que** la commutation est préparée à l'aide d'un premier élément de manoeuvre (2), et la commutation peut être mise en oeuvre à l'aide d'un deuxième élément de manoeuvre (2a).

3. Frein de stationnement électrique selon la revendication 1 ou 2, **caractérisé en ce que**, en tant qu'élément de manoeuvre (2a), unique ou supplémentaire (deuxième), on peut utiliser de préférence un commutateur d'activation du frein de stationnement électrique (1), à l'aide duquel le frein de stationnement électrique (1) peut de toute façon être actionné.

4. Frein de stationnement électrique selon l'une des revendications précédentes, **caractérisé en ce qu'**un dispositif de régulation (9) est configuré pour reconnaître, lors de l'activation du mode service, un actionnement manuel de l'élément de manoeuvre (2, 2a), mémoriser le mode service, et envoyer en sortie l'état du mode service activé, sous forme d'un signal d'avertissement acoustique et/ou optique.

5. Frein de stationnement électrique selon l'une des revendications précédentes, **caractérisé en ce que**, en tant que préparation à l'activation du mode service, l'élément de manoeuvre (2a) doit être enfoncé pendant la durée minimale prédéfinie.

6. Frein de stationnement électrique selon l'une des revendications précédentes, **caractérisé en ce que** le ou les éléments de manoeuvre (2) des émetteurs de signaux de véhicule doivent être enfoncés à plusieurs reprises pour l'activation et/ou la désactivation du mode service, en particulier à l'intérieur d'une fenêtre de temps prédéfinie, ou selon des intervalles de temps prédéfinis.

7. Frein de stationnement électrique selon l'une des revendications précédentes, **caractérisé en ce que**, pour l'activation et/ou la désactivation du mode service, un deuxième élément de manoeuvre (2a) doit être manoeuvré selon un deuxième schéma de manoeuvre, de préférence à l'intérieur d'une deuxième fenêtre de temps et/ou d'un schéma d'entrée et/ou en fonction d'un état de marche du véhicule à moteur.

8. Frein de stationnement électrique selon la revendication 1 ou 7, **caractérisé en ce que** le frein de stationnement électrique (1), en cas de non respect du schéma d'entrée, est automatiquement ramené en mode marche.

9. Frein de stationnement électrique selon l'une des revendications précédentes, **caractérisé en ce que**, pour l'activation du frein de stationnement électrique (1), un signal provenant d'un émetteur (7) du véhicule à moteur est exploité, en particulier un signal d'un Body-Controller, en particulier de la commande des projecteurs, d'un lave-glace, d'un dispositif de réglage du rétroviseur, etc., le signal ne présentant aucune relation directe avec la fonction du frein de stationnement électrique (1).

10. Frein de stationnement électrique selon l'une des revendications précédentes, **caractérisé en ce que** le retour en mode marche s'effectue selon le même schéma d'entrée et/ou avec les mêmes éléments de manoeuvre que ceux avec lesquels a lieu la commutation en mode service.

11. Frein de stationnement électrique selon l'une des revendications précédentes, **caractérisé en ce que**, pour revenir du mode service au mode marche, il faut enfoncer l'élément de manoeuvre supplémentaire (2a) du véhicule à moteur pendant un temps minimal prédéfini, et/ou une ou plusieurs fois.

12. Frein de stationnement électrique selon la revendication 11, **caractérisé en ce que** le retour en mode marche n'a lieu que quand la boîte de vitesses du véhicule à moteur est en position point mort ou parking, et/ou qu'une pédale de frein, destinée au frein principal, est enfoncée au moins une fois, puis est maintenue enfoncée.

13. Frein de stationnement électrique selon l'une des revendications précédentes, **caractérisé en ce que**, avant le retour du mode service au mode marche, ou déclenché par ce retour, un étalonnage du frein de stationnement électrique (1) peut être mis en oeuvre automatiquement ou manuellement selon un schéma d'entrée prédéfini.

14. Véhicule à moteur (35) comportant un frein de stationnement électrique selon l'une des revendications précédentes, le ou les éléments de manoeuvre (2, 2a) étant disposés dans ou sur le véhicule (35).
